# EUROPÄISCHE PATENTSCHRIFT

(11) **EP 2 268 928 B1**
(45) Veröffentlichungstag und Bekanntmachung des Hinweises auf die Patenterteilung: **03.08.2016**
(21) Anmeldenummer: 09730919.9
(22) Anmeldetag: 13.03.2009
(51) Int. Cl.: F16B 5/02, F16B 35/04

(54) **BEFESTIGUNGSELEMENT UND ABGASTURBOLADER MIT VARIABLER TURBINENGEOMETRIE**
SECURING ELEMENT AND EXHAUST GAS TURBOCHARGER HAVING VARIABLE TURBINE GEOMETRY
ÉLÉMENT DE FIXATION ET TURBOCOMPRESSEUR À GÉOMÉTRIE DE TURBINE VARIABLE

(30) Priorität: 08.04.2008 DE 102008017821
(43) Veröffentlichungstag der Anmeldung: 05.01.2011
(73) Patentinhaber: Continental Automotive GmbH, 30165 Hannover (DE)
(72) Erfinder: BÖNING, Ralf, 67829 Reiffelbach (DE); FRANKENSTEIN, Dirk, 67592 Flörsheim-Dalsheim (DE); FÄTH, Holger, 67136 Fußgönheim (DE); HILLER, Marc, 67294 Morschheim (DE)
(86) Internationale Anmeldenummer: PCT/EP2009/053004
(87) Internationale Veröffentlichungsnummer: WO 2009/124824

(56) Entgegenhaltungen:
- DE-A1- 3 705 181
- DE-A1- 4 205 322
- DE-A1-102004 033 884

## Beschreibung

Die Erfindung betrifft ein Befestigungselement, insbesondere für einen Abgasturbolader mit variabler Turbinengeometrie, sowie einen Abgasturbolader mit variabler Turbinengeometrie mit einem solchen Befestigungselement.

Die Erfindung betrifft insbesondere ein Befestigungselement mit den Merkmalen des Oberbegriffs von Anspruch 1. Ein derartiges Befestigungselement ist aus der DE 10 2004 044 703 A1 bekannt.

Abgasturbolader mit variabler Turbinengeometrie weisen gegenüber Abgasturboladern mit starrer Turbinengeometrie den Vorteil auf, dass der Eintrittsquerschnitt, unter dem die heißen Abgase auf das Turbinenrad des Abgasturboladers geleitet werden, mit Hilfe eines verstellbaren Leitapparats eingestellt werden kann. Durch diese Maßnahme lässt sich die Dynamik des Ladedruckaufbaus nahezu optimal an den jeweiligen Motorbetriebspunkt anpassen.

Die Deutsche Patentanmeldung DE 10 2004 033 884 A1 offenbart einen solchen Abgasturbolader mit variabler Turbinengeometrie. Die variable Turbinengeometrie wird hier durch ein verstellbares Leitgitter realisiert. Dieses Leitgitter besteht aus einem Kranz von Leitschaufeln variabler Ausrichtung, die in einem schmalen, als Schaufelraum bezeichneten Bereich zwischen dem Abgaszufuhrkanal der Turbine und dem Turbinenrotor angeordnet sind. Die Leitschaufeln sind in einem Trägerring drehbar gelagert, wobei die Verstellung der Leitschaufeln des Leitgitters mit Hilfe eines Verstellrings erfolgt.

Die genannte Druckschrift beschreibt zudem, dass diese im Folgenden als VTG-Leitgitteranordnung bezeichnete Baugruppe, bestehend aus dem Trägerring, aus mehreren Abstandshülsen und aus einem weiteren, als Flanschabschnitt bezeichneten ringförmigen Bauteil, mittels Schrauben am Lagergehäuse des Abgasturboladers befestigt ist.

Bedingt dadurch, dass der Trägerring und der Flanschabschnitt direkt den heißen Abgasströmen ausgesetzt sind und somit eine gegenüber dem Gehäusebauteil erhöhte Temperatur aufweisen und da die verwendeten Werkstoffe einen höheren Wärmeausdehnungskoeffizient als das Gehäusebauteil besitzen, weisen der Trägerring und der Flanschabschnitt im Betrieb eine größere temperaturbedingte Ausdehnung als das Gehäusebauteil auf.

In Folge der ungleichen temperaturbedingten Ausdehnung der miteinander verspannten Bauteile ist jede einzelne Schraube dann einer unerwünschten Abscherbeanspruchung in radialer Richtung ausgesetzt. Die eingeleiteten Querkräfte verursachen zudem Biegemomente, die zu Biegespannungen in der Schraube führen. Der sich in der Schraube einstellende Biegespannungsverlauf ist unerwünschterweise sehr ungleichmäßig. Auf Grund der Tatsache, dass die Einschraubstelle in dem Gehäusebauteil und der Bereich des Schraubenkopfs wie feste Einspannstellen wirken, liegen dort sehr große Biegespannungen vor, wohingegen die dazwischen liegenden Bereiche des Schraubenschafts nur unwesentlich auf Biegung beansprucht werden.

Im instationären Betrieb des Turboladers mit wechselnden Abgastemperaturen oder Abgasdurchsätzen stellt sich zusätzlich eine wechselnde Biegebeanspruchung der Schraube ein. In Folge dessen neigt die Schraube, insbesondere in den hochbelasteten Bereichen an der Einschraubstelle und am Schraubenkopf, zur Versprödung und zur Plastifizierung, woraus ein Verlust der Schraubenvorspannkraft oder im schlimmsten Fall ein Ermüdungsbruch der Schraube resultiert. Bei einem Verlust der Schraubenvorspannkraft ist die Maßhaltigkeit der VTG-Leitgitteranordnung nicht mehr gewährleistet. Das Spiel der Leitschaufeln in dem Schaufelraum nimmt zu, so dass vermehrt Strömungsverluste an den Leitschaufeln auftreten, die sich schädlich auf den Gesamtwirkungsgrad des Abgasturboladers auswirken können. Bedingt durch den Verlust der Schraubenvorspannkraft besteht zudem die Gefahr, dass sich die Schrauben durch Vibrationen vollständig lockern, woraus schließlich ein Totalausfall der VTG-Leitgitteranordnung resultiert. Ein Ermüdungsbruch der Schrauben hat den sofortigen Totalausfall der VTG-Leitgitteranordnung zur Folge.
Aufgabe der vorliegenden Erfindung ist es, ein verbessertes Befestigungselement, insbesondere für einen Abgasturbolader mit variabler Turbinengeometrie bereitzustellen.

Erfindungsgemäß wird diese Aufgabe durch ein Befestigungselement mit den Merkmalen des Patentanspruchs 1 sowie einen Abgasturbolader mit variabler Turbinengeometrie mit den Merkmalen des Patentanspruchs 8 gelöst.

Demgemäß ist ein Befestigungselement vorgesehen, mit einem Kopfabschnitt, mit einem Schaft, der einen sich in axialer Richtung des Schafts verändernden Querschnitt aufweist, wobei der Querschnitt des Schafts derart mit veränderlichem Querschnitt gestaltet ist, dass er unter Berücksichtigung eines qualitativ und/oder quantitativ vorgegebenen Biegemomentenverlaufs in dem Schaft einen gegenüber einem Befestigungselement mit konstantem Schaftquerschnitt weitgehend gleichmäßigen Biegespannungsverlauf in dem Schaft aufweist.

Darüber hinaus ist ein Abgasturbolader mit variabler Turbinengeometrie vorgesehen, mit zumindest einem Gehäusebauteil, welches zumindest eine Anbindungsstelle zur Anbindung eines solchen Befestigungselementes aufweist, mit einer verstellbaren VTG-Leitgitteranordnung zur Veränderung des Turbinenströmungsquerschnitts, welche zumindest eine Ausnehmung aufweist, mit zumindest einen solchen Befestigungselement, zur Befestigung der VTG-Leitgitteranordnung an dem Gehäusebauteil, wobei das Befestigungselement durch die Ausnehmung der VTG-Leitgitteranordnung hindurch an der Anbindungsstelle des Gehäusebauteils befestigt ist.

Die der vorliegenden Erfindung zugrunde liegende Idee besteht darin, ein Befestigungselement mit einem Schaft bereitzustellen, welches an den Biegemomentenverlauf in dem Schaft angepasst ist, so dass sich in dem Schaft des Befestigungselementes eine gleichmäßige Materialbeanspruchung in Folge von Biegespannungen einstellt. Hierzu weist das erfindungsgemäße Befestigungselement einen Schaft mit einem sich in axialer Richtung des Schafts verändernden Querschnitt auf. Das Biegewiderstandsmoment des Schafts ist an jeder Stelle des Schafts an das dort anliegende Biegemoment angepasst, so dass sich eine gleichmäßige Biegespannungsverteilung in dem Schaft des Befestigungselementes einstellt.

Eine weitere Idee der vorliegenden Erfindung besteht darin, eine VTG-Leitgitteranordnung mit Hilfe eines erfindungsgemäßen Befestigungselementes an einem Gehäusebauteil eines Abgasturboladers mit variabler Turbinengeometrie zu befestigen. Hierdurch werden die durch temperaturbedingte Ausdehnung der VTG-Leitgitteranordnung hervorgerufenen Biegespannungen in dem Befestigungselement vergleichmäßigt. Durch die Vermeidung lokal überhöhter Biegespannungen in dem Befestigungselement wird die Gefahr einer Plastifizierung und Versprödung des Befestigungselementes vermindert. Die Wahrscheinlichkeit eines Bauteilversagens in dem Befestigungselement wird daher deutlich herabgesetzt, was wiederum eine höhere Betriebssicherheit der VTG-Leitgitteranordnung und des gesamten Turboladers zufolge hat.

Vorteilhafte Ausgestaltungen und Weiterbildungen der Erfindung sind Gegenstand der Unteransprüche sowie der Beschreibung unter Bezugnahme auf die Zeichnungen.

In einer erfindungsgemäßen Ausführungsform weist der Schaft des Befestigungselementes an einer oder an mehreren Stellen einen verjüngten Querschnitt auf. Dadurch wird ein lokaler Abfall des Biegemomentenverlaufs in dem Schaft kompensiert, so dass sich ein konstanter Biegespannungsverlauf einstellt.

In einer erfindungsgemäßen Ausführungsform weist der Schaft des Befestigungselementes an einer oder an mehreren Stellen einen lokal verdickten Querschnitt auf. Dadurch wird eine lokale Überhöhung des Biegemomenentenverlaufs kompensiert, so dass sich ein konstanter Biegespannungsverlauf in dem Schaft einstellt.

In einer erfindungsgemäßen Ausführungsform weist der Schaft des Befestigungselementes ein Gewinde auf, um das Befestigungselement in ein weiteres Bauteil einschrauben zu können oder um ein weiteres Befestigungselement, wie zum Beispiel eine Mutter, auf das erfindungsgemäße Befestigungselement aufschrauben zu können.

In einer weiteren erfindungsgemäßen Ausführungsform ist der Kopfabschnitt des Befestigungselementes als ein daran angeformter Schraubenkopf ausgebildet.

In einer weiteren erfindungsgemäßen Ausführungsform ist der Kopfabschnitt des Befestigungselementes als eine Mutter ausgebildet, die auf den Schaft des Befestigungselementes aufgeschraubt ist.

Ein erfindungsgemäßes Befestigungselement kann aus einem Automatenstahl, aus einem Kaltstauchstahl, aus einem Kaltfließpressstahl, aus einem allgemeinen Baustahl oder aus einem Vergütungsstahl gefertigt sein. Um in einer heißen Umgebung, wie beispielweise in einem Abgasturbolader, einsetzbar zu sein, ist das erfindungsgemäße Befestigungselement in einer bevorzugten Ausführungsform aus einem hochwarmfesten austenitischen Stahl gefertigt. In einer besonders bevorzugten Ausführungsform der Erfindung ist das Befestigungselement aus einer Superlegierung auf Eisen-, Nickel-, Platin-, Chrom- und/oder Kobaltbasis gefertigt. Die Verwendung einer derartigen Superlegierung erlaubt den Einsatz des Befestigungselementes in außergewöhnlich heißen Milieus, wie zum Beispiel in einem Abgasturbolader. Beispiele für derartige Superlegierungen sind die folgenden Werkstoffe Stellite, Tribaloy, Hastelloy, Incoloy, Inconel, Nimonic und R88DT.

Bei schaftförmigen Befestigungselementen kann das erfindungsgemäße Befestigungselement durch Kaltumformen oder durch Warmumformen gefertigt sein. Bedingt dadurch, dass der Schaftquerschnitt eines erfindungsgemäßen Befestigungselementes unter Umständen stark variiert, ist das erfindungsgemäße Befestigungselement in einer bevorzugten Ausführungsform durch Drehen gefertigt. Mit einem derart gefertigten Befestigungselement lassen sich komplexere Schaftgeometrien darstellen. In einer besonders bevorzugten Ausführungsform der vorliegenden Erfindung ist das Befestigungselement durch Schleifen gefertigt. Ein derartiges Befestigungselement ist ebenfalls besonders vorteilhaft, da sich zum einen komplexe Schaftgeometrien darstellen lassen sowie zum anderen enge Fertigungstoleranzen eingehalten werden können.

In einer erfindungsgemäßen Ausführungsform des Abgasturboladers mit variabler Turbinengeometrie ist das erfindungsgemäße Befestigungselement in die Anbindungsstelle an dem Gehäusebauteil des Abgasturboladers eingeschraubt. Durch eine derartige Anbindung des Befestigungselementes an dem Gehäusebauteil des Turboladers lässt sich eine zuverlässige Befestigung der VTG-Leitgitteranordnung an dem Gehäusebauteil des Abgasturboladers besonders einfach realisieren. Alternativ dazu kann ein erfindungsgemäßes Befestigungselement auch beispielsweise in die Anbindungsstelle an dem Gehäusebauteil eingepresst sein oder mit Hilfe einer Löt- oder Schweißverbindung an der Anbindungsstelle befestigt sein.

Erfindungsgemäß ist in dem Abgasturbolader abschnittsweise ein radiales Spiel zwischen dem Schaft des Befestigungselementes und der Ausnehmung der VTG-Leitgitteranordnung vorgesehen. Durch das radiale Spiel kann eine unerwünschte Lasteinleitung in den Schaft des Befestigungselementes vermieden werden. Insbesondere im Bereich der Anbindungsstelle des Gehäusebauteils kann durch ein solches radiales Spiel eine ungünstige Abscherbeanspruchung des Schafts des Befestigungselementes vermieden werden. Hierdurch wird die Gefahr einer Plastifizierung und Versprödung des Schafts in Folge der von der Abscherung im Bereich der Anbindungsstelle hervorgerufenen starken Krümmung des Schafts vermieden.

Erfindungsgemäß liegt in dem Abgasturbolader der Schaft des Befestigungselementes abschnittsweise an der Wand der Ausnehmung der VTG-Leitgitteranordnung direkt an. Hierdurch kann, insbesondere im Bereich des Kopfabschnitts des Befestigungselementes, eine lokale Lasteinleitung in den Schaft des Befestigungselementes erfolgen. Ein weiterer Vorteil einer derartigen Konfiguration besteht darin, dass einzelne Bauteile der VTG-Leitgitteranordnung radial auf dem Schaft des Befestigungselementes gelagert werden können.

In einer typischen Ausführungsform eines erfindungsgemäßen Turboladers ist das Gehäusebauteil, an welchem die VTG-Leitgitteranordnung mit Hilfe des erfindungsgemäßen Befestigungselementes befestigt ist, das Lagergehäuse des Abgasturboladers. In einer alternativen typischen Ausführungsform des erfindungsgemäßen Abgasturboladers ist das Gehäusebauteil, an welchem die VTG-Leitgitteranordnung mit Hilfe des erfindungsgemäßen Befestigungselementes befestigt ist, das Turbinengehäuse des Abgasturboladers.

In einer weiteren typischen Ausführungsform eines erfindungsgemäßen Abgasturboladers umfasst die VTG-Leitgitteranordnung, die mit Hilfe eines erfindungsgemäßen Befestigungselementes an dem Gehäusebauteil des Abgasturboladers befestigt ist, zumindest einen Trägerring und mehrere VTG-Leitschaufeln, die in dem Trägerring drehbar gelagert sind.

In einer bevorzugten Ausführungsform eines erfindungsgemäßen Abgasturboladers umfasst die VTG-Leitgitteranordnung zwei Trägerringe, wobei die VTG-Leitschaufeln sandwichartig zwischen einem ersten und einem zweiten Trägerring angeordnet und in den ersten und dem zweiten Trägerring drehbar gelagert sind. Gegenüber der Lagerung der VTG-Leitschaufel mit nur einem Trägerring weist eine derartige, zweiseitige Lagerung der VTG-Leitschaufeln den Vorteil einer größeren Lagerstützweite auf.

In einer weiteren, typischen Ausführungsform eines erfindungsgemäßen Abgasturboladers umfasst die VTG-Leitgitteranordnung einen oder mehrere Abstandshalter, welche im montierten Zustand die freie Beweglichkeit der VTG-Leitschaufeln gewährleisten. Derartige Abstandshalter halten die von dem Befestigungselement in die VTG-Leitgitteranordnung eingebrachte Spannkraft von den VTG-Leitschaufeln fern, so dass deren Drehbarkeit auch im montierten Zustand erhalten bleibt.

In einer weiteren, typischen Ausführungsform eines erfindungsgemäßen Abgasturboladers weist die VTG-Leitgitteranordnung einen Verstellring zur Veränderung der Stellung der VTG-Leitschaufeln auf. Durch Verdrehung dieses parallel und koaxial zu einem Trägerring angebrachten Verstellrings wird die Verstellung der VTG-Leischaufeln realisiert. Um die Verdrehbarkeit des Verstellrings sicherzustellen, ist dieser im montierten Zustand nicht der von dem Befestigungselement in die VTG-Leitgitteranordnung eingebrachten Spannkraft ausgesetzt.
In einer weiteren, bevorzugten Ausführungsform eines erfindungsgemäßen Abgasturboladers weist die VTG-Leitgitteranordnung einen oder mehrere Wälzkörper auf, auf welchen den Verstellring zur Verstellung der VTG-Leitschaufeln drehbar gelagert ist. Durch Verwendung derartiger Wälzkörper wird eine leichtgängige Verdrehbarkeit des Verstellrings gewährleistet.

In einer weiteren, bevorzugten Ausführungsform eines erfindungsgemäßen Abgasturboladers weist die VTG-Leitgitteranordnung ein Distanzstück auf, welches im montierten Zustand an dem Gehäusebauteil des Abgasturboladers anliegt und welches der von dem erfindungsgemäßen Befestigungselement in die VTG-Leitgitteranordnung eingebrachten Spannkraft ausgesetzt ist. Ein derartiges Distanzstück weist den Vorteil auf, dass die übrigen Bauteile der VTG-Leitgitteranordnung in einem definierten Abstand von dem Gehäusebauteil angebracht werden können. Insbesondere wird durch ein solches Distanzstück das besonders schädliche Abscheren des Schafts des Befestigungselementes im Bereich der Anbindungsstelle des Gehäusebauteils infolge der Temperatur bedingten Ausdehnung eines heißen Trägerrings vermieden.

Die Erfindung wird nachfolgend anhand der in den schematischen Figuren der Zeichnung angegebenen Ausführungsbeispiele näher erläutert. Es zeigt dabei:
- Figur 1: eine Seitenansicht eines ersten Ausführungsbeispiels eines erfindungsgemäßen Befestigungselementes;
- Figur 1a: eine grafische Darstellung des Biegemomentenverlaufs in dem ersten Ausführungsbeispiel eines erfindungsgemäßen Befestigungselementes;
- Figur 1b: eine grafische Darstellung des Biegespannungsverlaufs in dem ersten Ausführungsbeispiel eines erfindungsgemäßen Befestigungselementes;
- Figur 2: eine Seitenansicht eines zweiten Ausführungsbeispiels eines erfindungsgemäßen Befestigungselementes;
- Figur 2a: eine grafische Darstellung des Biegemomentenverlaufs in dem zweiten Ausführungsbeispiel eines erfindungsgemäßen Befestigungselementes;
- Figur 2b: eine grafische Darstellung des Biegespannungsverlaufs in dem zweiten Ausführungsbeispiel eines erfindungsgemäßen Befestigungselementes;
- Figur 3: eine Teilschnittansicht eines ersten Ausführungsbeispiels eines erfindungsgemäßen Abgasturboladers;
- Figur 4: eine Teilschnittansicht eines zweiten Ausführungsbeispiels eines erfindungsgemäßen Abgasturboladers;
- Figur 5: eine Schnittansicht eines dritten Ausführungsbeispiels eines erfindungsgemäßen Abgasturboladers.

In allen Figuren der Zeichnungen sind gleiche bzw. funktionsgleiche Elemente - sofern nichts Anderes angegeben ist - mit denselben Bezugszeichen versehen worden.

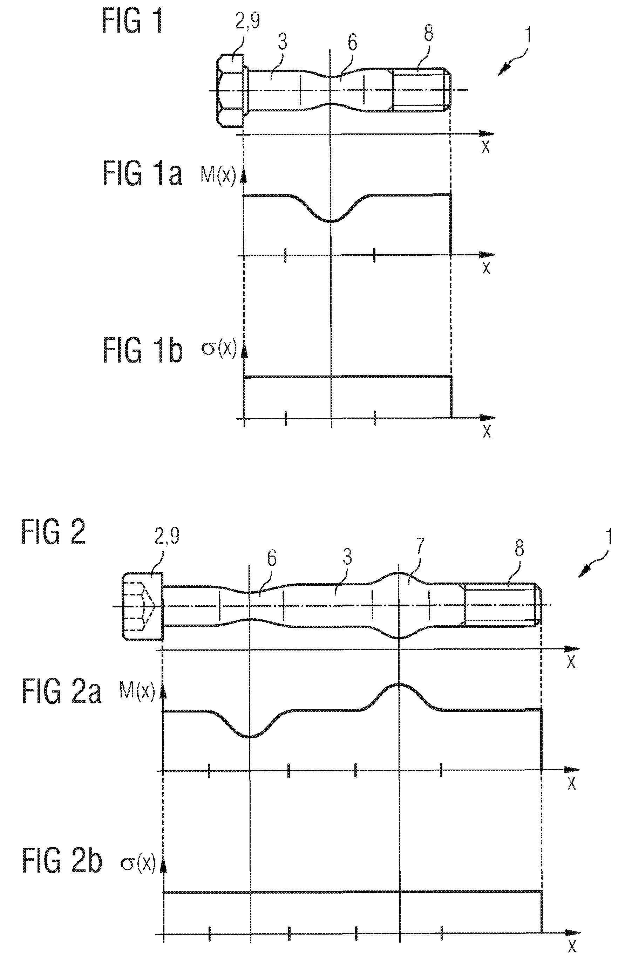

Fig. 1 zeigt eine Seitenansicht eines ersten Ausführungsbeispiels eines erfindungsgemäßen Befestigungselementes 1. Das Befestigungselement 1 weist einen Kopfabschnitt 2 sowie einen Schaft 3 auf. Der Kopfabschnitt 2 ist hier als ein an das Befestigungselement einteilig angeformter Schraubenkopf 9 ausgebildet. Auf der dem Kopfabschnitt 2 gegenüberliegenden Seite weist der Schaft 3 des Befestigungselementes 1 ein Gewinde 8 auf. Der Schaft 3 des Befestigungselementes 1 weist z.B. eine lokale Verjüngung 6 auf.

Fig. 1a zeigt eine grafische Darstellung des Biegemomentverlaufs M(x) in dem ersten Ausführungsbeispiel eines erfindungsgemäßen Befestigungselementes. Der Biegemomentenverlauf M(x) ist als Funktion der Längskoordinate x des Schafts 3 dargestellt.

Fig. 1b zeigt eine grafische Darstellung des Biegespannungsverlaufs σ(*x*) in dem ersten Ausführungsbeispiel eines erfindungsgemäßen Befestigungselementes 1. Der Biegespannungsverlauf σ(*x*) ist als Funktion der Längskoordinate x des Schafts 3 dargestellt. Der Biegespannungsverlauf σ(*x*) ist hierin als der sich im maximalen Abstand zur neutralen Faser des Schafts 3 einstellende Biegespannungsverlauf σ(*x*) zu verstehen.

Wie die Zusammenschau der Fig. 1, 1a und 1b zeigt, ist die lokale Verjüngung 6 des Schafts 3 derart ausgebildet, so dass sich unter Berücksichtigung des in Fig. 1a gezeigten lokalen Abfalls des Biegemomentenverlaufs M(x) der in Fig. 1b gezeigte, konstante Biegespannungsverlauf σ(*x*) in dem Schaft 3 des Befestigungselementes 1 einstellt.

Fig. 2 zeigt eine Seitenansicht eines zweiten Ausführungsbeispiels eines erfindungsgemäßen Befestigungselementes 1. Im Unterschied zu dem in Fig. 1 gezeigten Schraubenkopf 9 weist der hierin verwendete Schraubenkopf 9 anstatt eines Außensechskants einen Innensechskant auf. Darüber hinaus unterscheidet sich das Befestigungselement 1 hier dadurch, dass der Schaft 3 des Befestigungselementes 1 neben einer lokalen Verjüngung 6 zusätzlich eine lokale Verdickung 7 aufweist.

Fig. 2a zeigt eine grafische Darstellung des Biegemomentverlaufs M(x) in dem zweiten Ausführungsbeispiel eines erfindungsgemäßen Befestigungselementes.

Fig. 2b zeigt eine grafische Darstellung des Biegespannungsverlaufs σ(*x*) in dem zweiten Ausführungsbeispiel eines erfindungsgemäßen Befestigungselementes 1. Der Biegespannungsverlauf σ(*x*) ist hierin als der sich im maximalen Abstand zur neutralen Faser des Schafts 3 einstellende Biegespannungsverlauf σ(*x*) zu verstehen.

Wie die Zusammenschau der Fig. 2, 2a und 2b zeigt, ist die lokale Verjüngung 6 bzw. die lokale Verdickung 7 des Schafts 3 des Befestigungselementes 1 derart ausgebildet, so dass sich unter Berücksichtigung des in Fig. 2a gezeigten lokalen Abfalls bzw. der lokalen Überhöhung des Biegemomentenverlaufs M(x) in dem Schaft 3 des Befestigungselementes 1 der in Fig. 2b gezeigte konstante Biegespannungsverlauf σ(*x*) einstellt.

Die in den Fig. 1 und 2 gezeigten Befestigungselemente 1 sind beispielsweise aus einem Automatenstahl, aus einem Kaltstauchstahl oder aus einem Kaltfließpressstahl hergestellt. Zum Einsatz in einer heißen Umgebung sind diese bevorzugter aus einem hochwarmfesten austenitischen Stahl hergestellt und zum Einsatz in einer besonders heißen Umgebung idealerweise aus einer Superlegierung hergestellt.

Die erfindungsgemäßen Befestigungselemente 1 sind z. B. durch Kaltumformen oder durch Warmumformen gefertigt. Zur Realisierung komplexer Schaftgeometrien des Befestigungselements 1 kann dieses bevorzugterweise durch Drehen gefertigt sein. Zur Realisierung komplexer Schaftgeometrien bei gleichzeitiger Einhaltung enger Fertigungstoleranzen können die erfindungsgemäßen Befestigungselemente 1 vorzugsweise durch Schleifen gefertigt sein.

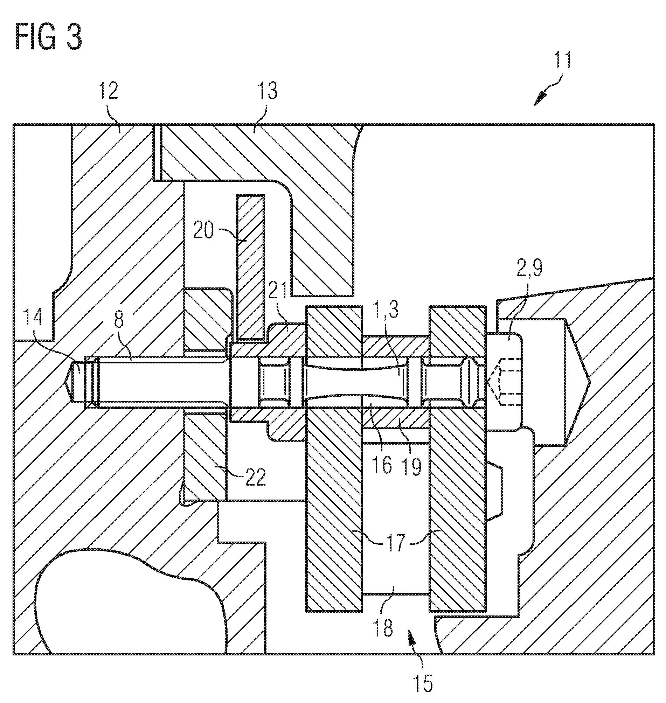

Fig. 3 zeigt eine Teilschnittansicht eines ersten Ausführungsbeispiels eines erfindungsgemäßen Abgasturboladers 11. Wie in der Fig. 3 beispielhaft gezeigt, ist eine zwischen dem Lagergehäuse 12 und dem Turbinengehäuse 13 angeordnete VTG-Leitgitteranordnung 15 mit Hilfe eines erfindungsgemäßen Befestigungselementes 1 an dem Lagergehäuse 12 des Abgasturboladers 11 mit variabler Turbinengeometrie befestigt. Hierzu ist das mit einem Schraubenkopf 9 ausgeführte, erfindungsgemäße Befestigungselement 1 durch eine Ausnehmung 16 der VTG-Leitgitteranordnung 15 hindurch an der Anbindungsstelle 14 des Lagergehäuses 12 befestigt. Der Schaft 3 des gezeigten Befestigungselementes 1 weist auf der dem Schraubenkopf 9 gegenüberliegenden Seite ein Gewinde 8 auf. Mit Hilfe dieses Gewindes 8 ist das Befestigungselement 1 in die Anbindungsstelle 14 des Lagergehäuses 12 eingeschraubt.

Nachfolgend werden die die beispielhaft gezeigte VTG-Leitgitteranordnung 15 bildenden Bauteile beschrieben:
Zwischen der Anbindungsstelle 14 des Lagergehäuses 12 und dem Kopfabschnitt 2 des Befestigungselementes 1 weist die VTG-Leitgitteranordnung 15 die folgenden, von dem Befestigungselement 1 durchgriffenen Bauteile auf: Distanzstück 22, Wälzkörper 21, erster Trägerring 17, Abstandshalter 19 und zweiter Trägerring 17. Zusätzlich dazu wird eine von mehreren VTG-Leitschaufeln 18 gezeigt, welche zwischen den beiden Trägerringen 17 drehbar gelagert sind. Darüber hinaus weist die VTG-Leitgitteranordnung 15 einen Verstellring 20 zur Verstellung der VTG-Leitschaufeln 18 auf, welcher auf dem gezeigten Wälzkörper 21 drehbar gelagert ist. Der Wälzkörper 21 selbst ist auf dem Befestigungselement 1 drehbar gelagert, indem der Schaft 3 des Befestigungselementes 1 an der Wand der Ausnehmung 16 des Wälzkörpers 21 anliegt. Zur radialen Lagerung des Abstandshalters 19 liegt zudem der Schaft 3 des Befestigungselements 1 an der Wand der Ausnehmung 16 des Abstandshalters 19 an. Um die aus der thermischen Dehnung der Trägerringe 17 resultierenden Querkräfte in möglichst großem Abstand zu der Aufnahmestelle 14 in dem Lagergehäuse 12 in den Schaft 3 des Befestigungselementes 1 einzuleiten, ist zwischen dem Schaft 3 des Befestigungselementes 1 und der Ausnehmung des ersten Trägerrings 17 ein radiales Spiel vorgesehen, wohingegen der Schaft 3 des Befestigungselementes 1 an der Wand der Ausnehmung 16 des zweiten Trägerrings 17 anliegt. Zur Vermeidung einer unerwünschten und im Hinblick auf die Dauerhaftigkeit des Befestigungselementes 1 schädlichen Abscherbeanspruchung im Bereich der Anbindungsstelle 14 an dem Lagergehäuse 12 ist ein radiales Spiel zwischen dem Schaft 3 des Befestigungselementes 1 und der Ausnehmung 16 des Distanzstücks 22 vorgesehen. Wie oben erläutert, weist das erfindungsgemäße Befestigungselement 1 einen Schaft 3 mit einem sich in axialer Richtung verändernden Querschnitt auf, um die Biegespannungen in dem Schaft 3 des Befestigungselementes 1 zu vergleichmäßigen.

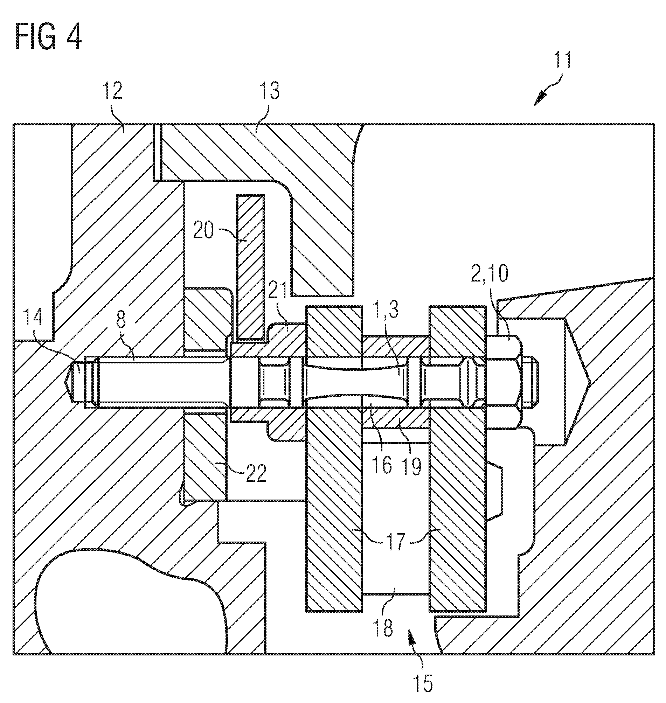

Fig. 4 zeigt eine Teilschnittansicht eines zweiten Ausführungsbeispiels eines erfindungsgemäßen Abgasturboladers 11. Die VTG-Leitgitteranordnung 15 unterscheidet sich in ihrem Aufbau nicht von der in Fig. 3 gezeigten VTG-Leitgitteranordnung 15. Die Leitgitteranordnung 15 ist wiederum mit Hilfe eines erfindungsgemäßen Befestigungselementes 1 an einer Anbindungsstelle 14 des Lagergehäuses 12 befestigt. Der Schaft 3 des gezeigten Befestigungselementes 1 weist -wie in dem in Fig. 3 gezeigten Ausführungsbeispielauf der dem Kopfabschnitt 2 des Befestigungselementes 1 gegenüberliegenden Seite, ein Gewinde 8 auf. Mit Hilfe dieses Gewindes 8 ist das Befestigungselement 1 in die Anbindungsstelle 14 des Lagergehäuses 12 eingeschraubt. Im Gegensatz zu dem in Fig. 3 gezeigten Ausführungsbeispiel ist der Kopfabschnitt 2 des beispielhaft gezeigten Befestigungselementes 1 als eine Mutter 10 ausgeführt, die auf den Schaft 3 des Befestigungselementes 1 aufgeschraubt ist.

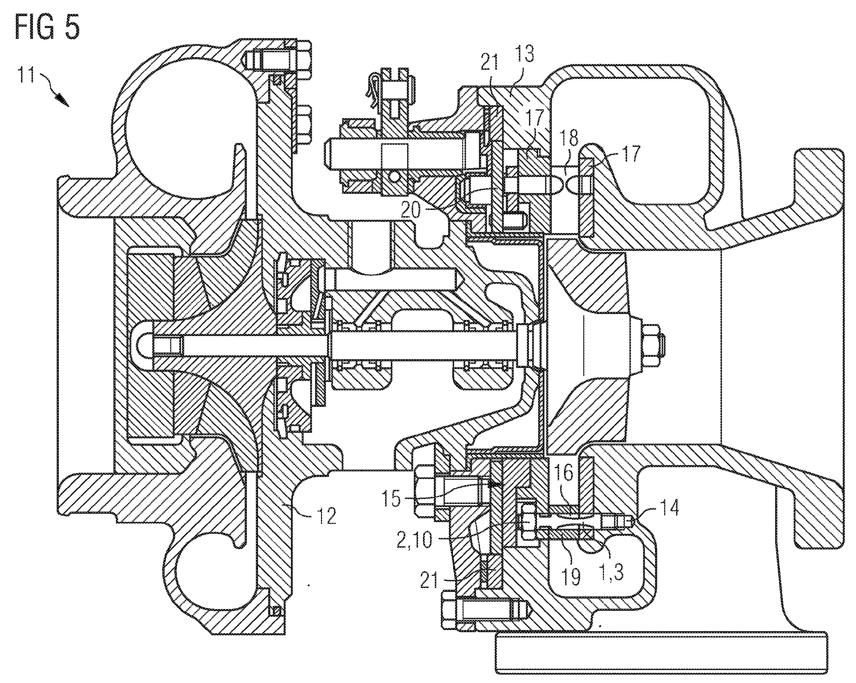

Fig. 5 zeigt eine Schnittansicht eines dritten Ausführungsbeispiels eines erfindungsgemäßen Abgasturboladers 11. Im Unterschied zu den bisherigen Ausführungsbeispielen ist die gezeigte VTG-Leitgitteranordnung 15 in dem Abgasturbolader 11 nicht an dem Lagergehäuse 12 sondern an dem Turbinengehäuse 13 befestigt. Die VTG-Leitgitteranordnung 15 weist die folgenden, zwischen der Anbindungsstelle 14 des Turbinengehäuses 13 und dem Kopfabschnitt 2 des Befestigungselementes 1 liegenden und von dem Befestigungselement 1 durchgriffenen Bauteile auf: erster Trägerring 17, Abstandshalter 19 und zweiter Trägerring 17. Zusätzlich dazu weist die VTG-Leitgitteranordnung 15 VTG-Leitschaufeln 18 auf, die zwischen dem ersten und dem zweiten Trägerring 17 drehbar gelagert sind. Darüber hinaus weist die VTG-Leitgitteranordnung 15 einen Verstellring 20 zur Verstellung der Position der VTG-Leitschaufeln 18 auf. Zur Gewährleistung der Verdrehbarkeit des Verstellrings 20 kann dieser auf Wälzkörpern 21, die im Turbinengehäuse 13 des Abgasturboladers 11 gelagert sind, abrollen. Der Kopfabschnitt 2 des gezeigten Befestigungselementes 1 ist als eine Mutter 10 ausgebildet, die auf den Schaft 3 des Befestigungselementes 1 aufgeschraubt ist. Zur Vermeidung einer Abscherbeanspruchung in der Nähe der Anbindungsstelle 14 in dem Turbinengehäuse 13 ist ein radiales Spiel zwischen dem Schaft 3 des Befestigungselementes 1 und der Wand der Ausnehmung 16 des ersten Trägerrings 17 vorgesehen. Um die aus der thermischen Dehnung des Trägerrings 17 resultierenden Querkräfte in möglichst großem Abstand zu der Anbindungsstelle 14 in dem Turbinengehäuse 13 in den Schaft 3 des Befestigungselements 1 einzuleiten, liegt der Schaft 3 unmittelbar an der Wand der Ausnehmung 16 des zweiten Trägerrings 17 an. Um den Abstandshalter 19 in radialer Richtung festzulegen, liegt der Schaft 3 des Befestigungselementes 1 an der Wand der Ausnehmung 16 des Abstandshalters 19 an. Erfindungsgemäß weist der Schaft 3 des Befestigungselementes 1 einen sich in axialer Richtung des Schafts 3 verändernden Querschnitt auf, um den Biegespannungsverlauf in dem Schaft 3 des Befestigungselementes 1 zu vergleichmäßigen.

Obgleich die vorliegende Erfindung vorstehend anhand bevorzugter Ausführungsbeispiele beschrieben wurde, ist sie nicht darauf beschränkt, sondern auf vielfältige Art und Weise modifizierbar.

So sei die Erfindung nicht auf den in den vorstehenden Figuren dargestellten speziellen Aufbau der Befestigungselemente beschränkt. Vielmehr können eben diese Befestigungselemente auf beliebige Art und Weise modifiziert werden, ohne dass vom grundlegenden Prinzip der Erfindung abgewichen wird.

Insbesondere muss der Schaft eines erfindungsgemäßen Befestigungselementes nicht notwendigerweise kreisförmig ausgebildet sein. So kann das einem erfindungsgemäßen Befestigungselement zugrunde liegende Prinzip beispielsweise auch bei Verwendung eines ovalen, viereckigen oder mehreckigen Schaftquerschnitts realisiert werden. Es ist darüber hinaus denkbar, dass sich die geometrische Grundform des Schaftquerschnitts in axialer Richtung des Schafts verändert. So könnte beispielsweise ein erfindungsgemäßes Befestigungselement einen in der Nähe des Kopfabschnitts kreisförmigen Schaftquerschnitt sowie einen auf der dem Kopfabschnitt gegenüberliegenden Seite eckigen Schaftquerschnitt aufweisen.

Es versteht sich von selbst, dass der Kopfabschnitt eines erfindungsgemäßen Befestigungselementes in vielfältiger Art und Weise gestaltet werden kann. Im Falle, dass der Kopfabschnitt des Befestigungselementes als ein an das Befestigungselement angeformter Schraubenkopf ausgeführt ist, kann dieser Schraubenkopf beispielsweise als Sechskantschraubenkopf, als Zylinderschraubenkopf, als Senkschraubenkopf, als Rundschraubenkopf, als Linsenkopf oder auch als Innensechskantkopf ausgeführt sein. Im Falle, dass der Kopfabschnitt des Befestigungselementes als eine auf das Befestigungselement aufgeschraubte Mutter ausgebildet ist, kann diese Mutter beispielsweise als gewöhnliche Sechskantmutter, als Hutmutter, als Nutmutter, als Flügelmutter, als Schlitzmutter, als Sechskantschweißmutter, als Kreuzlochmutter, als Sechskantmutter mit Zentrieransatz oder als Kapselmutter ausgebildet sein. Der Kopfabschnitt eines erfindungsgemäßen Befestigungselementes kann folglich in beliebiger Art und Weise, einteilig an das Befestigungselement angeformt oder als separates Bauteil ausgebildet sein, so lange der Kopfabschnitte des Be festigungselementes dazu geeignet ist, axiale Spannkräfte in dem Befestigungselement zu übertragen.

Die hierin gezeigten Ausführungsbeispiele für Abgasturbolader mit variabler Turbinengeometrie sind lediglich als illustrierende Ausführungsbeispiele zu verstehen. So versteht es sich von selbst, dass die VTG-Leitgitteranordnung in einem erfindungsgemäßen Abgasturbolader von den in den Ausführungsbeispielen gezeigten Bauformen erheblich abweichen kann. Unter dem Begriff VTG-Leitgitteranordnung wird hierin ganz allgemein eine Baugruppe verstanden, die VTG-Leitschaufeln variabler Ausrichtung sowie einen Verstellmechanismus zum Verändern der Ausrichtung dieser VTG-Leitschaufeln umfasst.

Die Befestigung einer VTG-Leitgitteranordnung an einem Gehäusebauteil eines erfindungsgemäßen Abgasturboladers kann selbstverständlich mit einem oder mit beliebig vielen erfindungsgemäßen Befestigungselementes erfolgen. Wie bereits in den Ausführungsbeispielen illustriert, müssen die erfindungsgemäßen Befestigungselemente hierzu nicht notwendigerweise alle Bauteile der VTG-Leitgitteranordnung durchgreifen.

## Patentansprüche

1. Befestigungselement (1) zur Befestigung einer verstellbaren VTG-Leitgitteranordnung (15) an einem Gehäusebauteil (12, 13) eines Abgasturboladers (11),
wobei die VTG-Leitgitteranordnung (15) zumindest eine Ausnehmung (16) aufweist,
wobei das Gehäusebauteil (12, 13) zumindest eine Anbindungsstelle (14) für das Befestigungselement (1) aufweist,
wobei das Befestigungselement (1) durch die Ausnehmung (16) der VTG-Leitgitteranordnung (15) hindurch an der Anbindungsstelle (14) befestigt ist,
wobei das Befestigungselement (1)einen Kopfabschnitt (2) und einen Schaft (3) aufweist und zumindest in dem der Anbindungsstelle (14) benachbarten Bereich ein radiales Spiel zwischen dem Schaft (3) und der Ausnehmung (16) der VTG-Leitgitteranordnung (15) vorgesehen ist und der Schaft (3) zumindest in dem dem Kopfabschnitt (2) benachbarten Bereich zur Einleitung einer Querkraft in den Schaft (3) an der Wand der Ausnehmung (16) der VTG-Leitgitteranordnung (15) anliegt,**dadurch gekennzeichnet,**
**dass** der Schaft (3), einen sich in axialer Richtung verändernden Querschnitt aufweist, derart, dass in dem Schaft (3), unter Berücksichtigung eines qualitativ und/oder quantitativ durch die Querkrafteinleitung vorgegebenen Biegemomentenverlaufs (4), ein gegenüber einem Befestigungselement mit konstantem Schaftquerschnitt weitgehend gleichmäßiger Biegespannungsverlauf (5) gewährleistet ist.

2. Befestigungselement (1) nach Anspruch 1,
**dadurch gekennzeichnet,**
**dass** der Schaft (2) des Befestigungselements (1) zumindest eine lokale Verjüngung (6) aufweist.

3. Befestigungselement (1) nach Anspruch 1 oder 2,
**dadurch gekennzeichnet,**
**dass** der Schaft(2) des Befestigungselements (1) zumindest eine lokale Verdickung (7) aufweist.

4. Befestigungselement (1) nach einem der vorhergehenden Ansprüche, **dadurch gekennzeichnet,**
**dass** der Schaft (2) des Befestigungselementes (1) zumindest abschnittsweise ein Gewinde (8) aufweist.

5. Befestigungselement (1) nach einem der vorhergehenden Ansprüche, **dadurch gekennzeichnet,**
**dass** der Kopfabschnitt (2) als ein an das Befestigungselement (1) angeformter Schraubenkopf (9) ausgebildet ist.

6. Befestigungselement (1) nach einem der Ansprüche 1 bis 4, **dadurch gekennzeichnet,**
**dass** der Kopfabschnitt (2) als eine Mutter (10) ausbildet ist, die auf den Schaft (3) des Befestigungselements (1) aufgeschraubt ist.

7. Befestigungselement (1) nach einem der vorhergehenden Ansprüche, **dadurch gekennzeichnet,**
**dass** das Befestigungselement (1) aus einem Automatenstahl oder aus einem Kaltstauchstahl oder aus einem Kaltfließpressstahl oder aus einem allgemeinen Baustahl oder aus einem Vergütungsstahl, bevorzugter aus einem hochwarmfesten austenitischen Stahl und noch bevorzugter aus einer Superlegierung gefertigt ist.

8. Abgasturbolader (11) mit variabler Turbinengeometrie und einem Befestigungselement (1) zur Befestigung einer verstellbaren VTG-Leitgitteranordnung (15) an einem Gehäusebauteil (12, 13) des Abgasturboladers (11),
wobei die VTG-Leitgitteranordnung (15) zumindest eine Ausnehmung (16) aufweist,
wobei das Gehäusebauteil (12, 13), zumindest eine Anbindungsstelle (14) zur Anbindung des Befestigungselements (1) aufweist und
wobei das Befestigungselement (1) durch die Ausnehmung (16) der VTG-Leitgitteranordnung (15) hindurch an der Anbindungsstelle (14) des Gehäusebauteils (12, 13) befestigt ist,
**dadurch gekennzeichnet,**
**dass** das Befestigungselement (1) gemäß einem der Ansprüche 1 bis 7 ausgeführt ist.

9. Abgasturbolader nach Anspruch 8 mit einem Befestigungselement (1) nach Anspruch 4, **dadurch gekennzeichnet,**
**dass** das Befestigungselement (1) in die Anbindungsstelle (14) eingeschraubt ist.

10. Abgasturbolader nach einem der Ansprüche 8 bis 9, **dadurch gekennzeichnet,**
**dass** das Gehäusebauteil (12, 13) das Lagergehäuse (12) oder das Turbinengehäuse (13) des Abgasturboladers (11) ist.

11. Abgasturbolader nach einem der Ansprüche 8 bis 10, **dadurch gekennzeichnet,**
**dass** die VTG-Leitgitteranordnung (15) zumindest einen Trägerring (17) und mehrere VTG-Leitschaufeln (18) aufweist, wobei die VTG-Leitschaufeln (18) in dem Trägerring (17) drehbar gelagert sind.

12. Abgasturbolader nach einem der Ansprüche 8 bis 11, **dadurch gekennzeichnet,**
**dass** die VTG-Leitgitteranordnung (15) zumindest zwei Trägerringe (17) aufweist, wobei die VTG-Leitschaufeln (18) sandwichartig zwischen einem ersten und einem zweiten Trägerring (17) angeordnet und in dem ersten und dem zweiten Trägerring (17) drehbar gelagert sind.

13. Abgasturbolader nach einem der Ansprüche 8 bis 12, **dadurch gekennzeichnet,**
**dass** die VTG-Leitgitteranordnung (15) zumindest einen an zumindest einem Trägerring (17) anliegenden Abstandshalter (19) aufweist, welcher im montierten Zustand einen Freiraum für die VTG-Leitschaufeln (18) aufrechterhält.

14. Abgasturbolader nach einem der Ansprüche 8 bis 13, **dadurch gekennzeichnet,**
**dass** die VTG-Leitgitteranordnung (15) zumindest einen Verstellring (20) zur Veränderung der Stellung der VTG-Leitschaufeln (18) aufweist.

15. Abgasturbolader nach Anspruch 14,
**dadurch gekennzeichnet,**
**dass** die VTG-Leitgitteranordnung (13) zumindest einen Wälzkörper (21) aufweist, auf welchem der Verstellring (20) zur Verstellung der VTG-Leitschaufeln (16) drehbar gelagert ist.

## Claims

1. Securing element (1) for securing an adjustable VTG guide cascade arrangement (15) to a casing component (12, 13) of an exhaust gas turbocharger (11),
wherein the VTG guide cascade arrangement (15) has at least one cutout (16),
wherein the casing component (12, 13) has at least one attachment point (14) for the securing element (1), wherein the securing element (1) is secured, through the cutout (16) of the VTG guide cascade arrangement (15), to the attachment point (14),
wherein the securing element (1) has a header section (2) and a shank (3) and, at least in the region adjacent to the attachment point (14), a radial clearance is provided between the shank (3) and the cutout (16) of the VTG guide cascade arrangement (15), and the shank (3) bears against the wall of the cutout (16) of the VTG guide cascade arrangement (15) at least in the region adjacent to the head section (2) in order to introduce a transverse force into the shank (3), **characterized**
**in that** the shank (3) has a cross section which changes in the axial direction so as to ensure, taking into account a bending moment profile (4) predefined qualitatively and/or quantitatively by the transverse force introduction, a largely constant bending stress profile (5) in the shank (3) in comparison to a securing element with constant shank cross section.

2. Securing element (1) according to Claim 1,
**characterized**
**in that** the shank (3) of the securing element (1) has at least one localized neck (6).

3. Securing element (1) according to Claim 1 or 2,
**characterized**
**in that** the shank (3) of the securing element (1) has at least one localized bulge (7).

4. Securing element (1) according to one of the preceding claims,
**characterized**
**in that** the shank (3) of the securing element (1) has at least one section with a thread (8).

5. Securing element (1) according to one of the preceding claims,
**characterized**
**in that** the head section (2) is designed as a screw head (9) formed on the securing element (1).

6. Securing element (1) according to one of Claims 1 to 4,
**characterized**
**in that** the head section (2) is designed as a nut (10) which is screwed onto the shank (3) of the securing element (1).

7. Securing element (1) according to one of the preceding claims,
**characterized**
**in that** the securing element (1) is made of a free cutting steel or of a cold-upsetting steel or of a cold extruding steel or of a general structural steel or of a tempering steel, more preferably of a high-temperature austenitic steel, and more preferably still of a superalloy.

8. Exhaust gas turbocharger (11) having variable turbine geometry and a securing element (1) for securing an adjustable VTG guide cascade arrangement (15) to a casing component (12, 13) of an exhaust gas turbocharger (11), wherein the VTG guide cascade arrangement (15) has at least one cutout (16),
wherein the casing component (12, 13) has at least one attachment point (14) for attaching the securing element (1), and
wherein the securing element (1) is secured, through the cutout (16) of the VTG guide cascade arrangement (15), to the attachment point (14) of the casing component (12, 13), **characterized**
**in that** the securing element (1) is embodied according to one of Claims 1 to 7.

9. Exhaust gas turbocharger according to Claim 8 having a securing element (1) according to Claim 4,
**characterized**
**in that** the securing element (1) is screwed into the attachment point (14).

10. Exhaust gas turbocharger according to either of Claims 8 and 9,
**characterized**
**in that** the casing component (12, 13) is the bearing casing (12) or the turbine casing (13) of the exhaust gas turbocharger (11).

11. Exhaust gas turbocharger according to one of Claims 8 to 10,
**characterized**
**in that** the VTG guide cascade arrangement (15) has at least one support ring (17) and multiple VTG guide vanes (18), wherein the VTG guide vanes (18) are mounted rotatably in the support ring (17).

12. Exhaust gas turbocharger according to one of Claims 8 to 11,
**characterized**
**in that** the VTG guide cascade arrangement (15) has at least two support rings (17), wherein the VTG guide vanes (18) are arranged in the manner of a sandwich between a first and a second support ring (17) and are mounted rotatably in the first and the second support ring (17).

13. Exhaust gas turbocharger according to one of Claims 8 to 12,
**characterized**
**in that** the VTG guide cascade arrangement (15) has at least one spacer (19) bearing against at least one support ring (17), which spacer maintains, in the assembled state, a free space for the VTG guide vanes (18).

14. Exhaust gas turbocharger according to one of Claims 8 to 13,
**characterized**
**in that** the VTG guide cascade arrangement (15) has at least one adjustment ring (20) for changing the position of the VTG guide vanes (18).

15. Exhaust gas turbocharger according to Claim 14,
**characterized**
**in that** the VTG guide cascade arrangement (15) has at least one rolling body (21) on which the adjustment ring (20) for changing the position of the VTG guide vanes (18) is mounted rotatably.

## Revendications

1. Elément de fixation (1) pour la fixation d'un ensemble de grille directrice VTG réglable (15) sur un composant d'enceinte (12, 13) d'un turbocompresseur (11),
dans lequel l'ensemble de grille directrice VTG (15) présente au moins un évidement (16),
dans lequel le composant d'enceinte (12, 13) présente au moins un point d'attache (14) pour l'élément de fixation (1),
dans lequel l'élément de fixation (1) est fixé au point d'attache (14) à travers l'évidement (16) de l'ensemble de grille directrice VTG (15),
dans lequel l'élément de fixation (1) présente une partie de tête (2) et une tige (3) et il est prévu au moins dans la région proche du point d'attache (14) un jeu radial entre la tige (3) et l'évidement (16) de l'ensemble de grille directrice VTG (15) et la tige (3) s'applique, au moins dans la région proche de la partie de tête (2), sur la paroi de l'évidement (16) de l'ensemble de grille directrice VTG (15) en vue d'introduire une force transversale dans la tige (3), **caractérisé en ce que** la tige (3) présente une section transversale qui varie en direction axiale, de telle manière qu'un profil de contrainte de flexion (5) largement uniforme par rapport à un élément de fixation avec une section transversale constante soit garanti dans la tige (3), compte tenu d'un profil de moment de flexion (4) prédéterminé au niveau qualitatif et au niveau quantitatif par l'introduction de la force transversale.

2. Elément de fixation (1) selon la revendication 1, **caractérisé en ce que** la tige (2) de l'élément de fixation (1) présente au moins un rétrécissement local (6).

3. Elément de fixation (1) selon la revendication 1 ou 2, **caractérisé en ce que** la tige (2) de l'élément de fixation (1) présente au moins une surépaisseur locale (7).

4. Elément de fixation (1) selon l'une quelconque des revendications précédentes, **caractérisé en ce que** la tige (2) de l'élément de fixation (1) présente au moins partiellement un filet (8).

5. Elément de fixation (1) selon l'une quelconque des revendications précédentes, **caractérisé en ce que** la partie de tête (2) est réalisée en forme de tête de vis (9) façonnée sur l'élément de fixation (1).

6. Elément de fixation (1) selon l'une quelconque des revendications 1 à 4, **caractérisé en ce que** la partie de tête (2) est réalisée en forme d'écrou (10), qui est vissé sur la tige (3) de l'élément de fixation (1).

7. Elément de fixation (1) selon l'une quelconque des revendications précédentes, **caractérisé en ce que** l'élément de fixation (1) est fabriqué en un acier de décolletage ou en un acier pour refoulement à froid ou en un acier pour filage à froid ou en un acier de construction général ou en un acier de traitement, de préférence en un acier austénitique réfractaire et de préférence encore en un superalliage.

8. Turbocompresseur (11) avec une turbine à géométrie variable et un élément de fixation (1) pour la fixation d'un ensemble de grille directrice VTG (15) à un composant d'enceinte (12, 13) du turbocompresseur (11), dans lequel l'ensemble de grille directrice VTG (15) présente au moins un évidement (16),
dans lequel le composant d'enceinte (12, 13) présente au moins un point d'attache (14) pour attacher l'élément de fixation (1) et
dans lequel l'élément de fixation (1) est fixé au point d'attache (14) du composant d'enceinte (12, 13) à travers l'évidement (16) de l'ensemble de grille directrice VTG (15), **caractérisé en ce que** l'élément de fixation (1) est réalisé selon l'une quelconque des revendications 1 à 7.

9. Turbocompresseur selon la revendication 8 avec un élément de fixation (1) selon la revendication 4, **caractérisé en ce que** l'élément de fixation (1) est vissé dans le point d'attache (14).

10. Turbocompresseur selon l'une des revendications 8 à 9, **caractérisé en ce que** le composant d'enceinte (12, 13) est le corps de palier (12) ou le corps de turbine (13) du turbocompresseur (11).

11. Turbocompresseur selon l'une quelconque des revendications 8 à 10, **caractérisé en ce que** l'ensemble de grille directrice VTG (15) présente au moins un anneau porteur (17) et plusieurs aubes directrices VTG (18), dans lequel les aubes directrices VTG (18) sont montées de façon rotative dans l'anneau porteur (17).

12. Turbocompresseur selon l'une quelconque des revendications 8 à 11, **caractérisé en ce que** l'ensemble de grille directrice VTG (15) présente au moins deux anneaux porteurs (17), dans lequel les aubes directrices VTG (18) sont montées en sandwich entre le premier et le deuxième anneaux porteurs (17) et sont montées de façon rotative dans le premier et dans le deuxième anneaux porteurs (17).

13. Turbocompresseur selon l'une quelconque des revendications 8 à 12, **caractérisé en ce que** l'ensemble de grille directrice VTG (15) présente au moins un écarteur (19) s'appliquant sur au moins un anneau porteur (17), qui à l'état monté préserve un espace libre pour les aubes directrices VTG (18).

14. Turbocompresseur selon l'une quelconque des revendications 8 à 13, **caractérisé en ce que** l'ensemble de grille directrice VTG (15) présente au moins un anneau de réglage (20) pour faire varier la position des aubes directrices VTG (18).

15. Turbocompresseur selon la revendication 14, **caractérisé en ce que** l'ensemble de grille directrice VTG (13) présente au moins un corps de roulement (21), sur lequel l'anneau de réglage (20) est monté de façon rotative pour le réglage des aubes directrices VTG (16).
